## Europäisches Patentamt
## European Patent Office
## Office européen des brevets

(11) Veröffentlichungsnummer : **0 055 243**
**B1**

(12) # EUROPÄISCHE PATENTSCHRIFT

(45) Veröffentlichungstag der Patentschrift :
02.05.84

(51) Int. Cl.³ : **B 60 P 3/14**, B 64 F 5/00

(21) Anmeldenummer : 81890193.6

(22) Anmeldetag : 03.12.81

(54) Fahrzeug zur Wartung von Flugzeugen.

(30) Priorität : 24.12.80 AT 6311/80

(43) Veröffentlichungstag der Anmeldung :
30.06.82 Patentblatt 82/26

(45) Bekanntmachung des Hinweises auf die Patenterteilung : 02.05.84 Patentblatt 84/18

(84) Benannte Vertragsstaaten :
BE DE FR GB IT NL SE

(56) Entgegenhaltungen :
DE-A- 2 031 568
FR-A- 1 493 991
GB-A- 1 158 920
US-A- 2 586 531
US-A- 3 511 339
US-A- 3 570 503

(73) Patentinhaber : Zellinger, Hans
Rosenau 16
A-4271 St. Owald/Freistadt (AT)

Zellinger, Fritz
Gschwand 279
A-4810 Gmunden (AT)

(72) Erfinder : Zellinger, Hans
Rosenau 16
A-4271 St. Owald/Freistadt (AT)
Erfinder : Zellinger, Fritz
Gschwand 279
A-4810 Gmunden (AT)

(74) Vertreter : Hübscher, Gerhard, Dipl.-Ing. et al
Patentanwälte Dipl.-Ing. Gerhard Hübscher Dipl.-Ing.
Helmut Hübscher Dipl.-Ing. Heiner Hübscher Spittelwiese 7
A-4020 Linz (AT)

Fahrzeug zur Wartung von Flugzeugen

Die Erfindung betrifft ein Fahrzeug zur Wartung von Flugzeugen, insbesondere zur Entsorgung der Toiletten von Passagierflugzeugen, bei dem auf einem Fahrgestell ein Aufbau mit wenigstens einem Aufnahmebehälter angebracht und im Bereich des Fahrzeughecks eine Arbeitskanzel vorgesehen ist, von der aus wenigstens eine zumindest teilweise flexible Anschlußleitung des Aufnahmebehälters manipulierbar ist und die aus einer Ruhestellung mittels eines stehenden hydraulischen Teleskopkolbentriebes höhenverstellbar ist, wobei die Arbeitskanzel, bezogen auf die Fahrzeuglängsachse, hinter dem Teleskopkolbentrieb angebracht ist.

Derartige Fahrzeuge können bei prinzipiell gleichbleibendem Aufbau zur Entsorgung der Toiletten, zur Versorgung von Flugzeugen mit Frischwasser und zur Durchführung kleinerer Wartungsarbeiten am Flugzeug eingesetzt werden. Die Ver- und Entsorgungsanschlüsse am Flugzeug sind in der Praxis je nach Flugzeugtyp an ganz verschiedenen Stellen und Höhen angebracht, so daß manchmal eine Standflächenhöhe der mittels des Kolbentriebes ausfahrbaren Arbeitskanzel von etwa 4 m benötigt wird, damit Bereiche des Flugzeuges, die beispielsweise 6 m über dem Boden liegen, erreicht werden können.

Aus der GB-A-1 158 920 ist ein Fahrzeug der eingangs genannten Art bekannt, bei dem ein als zylindrischer Kessel ausgebildeter Aufnahmebehälter liegend am Fahrzeug montiert ist und vor diesem Kessel gegebenenfalls noch ein Behälter für eine Desinfektionslösung angebracht wird. Die Oberseite des Kessels reicht etwa bis zur Dachhöhe des Fahrerhauses. Der für die Arbeitskanzel vorgesehene hydraulische Teleskopkolbentrieb benötigt daher nur eine im Verhältnis zur Fahrzeughöhe geringe Ausschubhöhe, praktisch auf die doppelte Länge gegenüber dem Ruhezustand, so daß die Konstruktion dieses Kolbentriebes keine Schwierigkeiten bereitet und mit der Arbeitskanzel die notwendige Arbeitshöhe erreicht werden kann. In der Praxis ist das Fahrzeug nach dieser bekannten Konstruktion allerdings nur bedingt einsetzbar. Bei vielen in Gebrauch stehenden Flugzeugen sind Teile vorhanden, die nur eine geringe Bauhöhe über dem Boden aufweisen, dabei handelt es sich beispielsweise um Rumpf, Tragflächen oder Höhenruder. Es ist nun oft notwendig, an solchen Bereichen Wartungen vorzunehmen und den Fahrzeugaufbau bzw. die Arbeitskanzel unter diese Bereiche, die eine Bodenhöhe unter 2 m aufweisen können, hinein zu manövrieren.

Um dies zu ermöglichen, hat man nach der US-A-3 570 503 bereits einen extrem flachen Aufbau mit einer Arbeitskanzel am Ende vorgesehen, wobei dieser Aufbau den oder die Aufnahmebehälter aufnimmt. Der gesamte Aufbau mit der am Ende fest montierten Kanzel ist über eine hydraulisch betätigbare Hubschere anhebbar bzw. wieder auf das Fahrzeug absenkbar. Diese Konstruktion ist äußerst aufwendig und erfordert insbesondere eine sehr stabile, die gesamte Nutzlast bewältigende Hubeinrichtung, die überdies einen großen Platzbedarf hat und eine entsprechend große Antriebsleistung für die sehr kräftig dimensionierten Kolbentriebe, mit deren Hilfe die Hubeinrichtung betätigt wird, benötigt.

Bei einer Eigenkonstruktion eines Fahrzeuges der gegenständlichen Art wurde ebenfalls ein flacher, den oder die Aufnahmebehälter enthaltender Aufbau vorgesehen, dessen Oberseite als Arbeitsbühne für Wartungsarbeiten verwendbar ist, wobei ein an seinem freien Ende eine Arbeitskanzel tragender Auslegerarm mittels eines hydraulischen Kolbentriebes unmittelbar hinter dem Fahrerhaus des Fahrzeuges auf- und niederschwenkbar gelagert war. Bei dieser Konstruktion ist eine Parallelführung vorgesehen, damit die Kanzel in jeder Anhebestellung eine ebene Standfläche besitzt. Der Auslegerarm kommt in seiner Ruhestellung der Länge nach neben den übrigen Fahrzeugaufbauten zu liegen, weshalb z. B. ein Tank an dieser Fahrzeugseite zurückgesetzt werden muß. Die Kanzel bewegt sich bei ihrer Höhenverstellung gleichzeitig auf einem Kreisbogen. Wenn diese Konstruktion gebenüber der vorher geschilderten mit flachem Aufbau auch einfacher und weniger aufwendig ist, ergibt sich trotzdem noch ein verhältnismäßig komplizierter Gesamtaufbau, ein großer Platzbedarf für den Ausleger, dessen Antriebseinrichtung und die Kanzel. Die Kanzel weist wegen ihrer Bewegung auf einem Kreisbogen bei verschiedenen Höheneinstellungen auch verschiedene Lagen zur Fahrzeuglängsachse auf. Das Einmanövrieren der Kanzel zu einem am Flugzeug vorgesehenen Anschluß wird dadurch schwierig. Die Anschlußleitungen der Ent- oder Versorgungstanks müssen vom jeweiligen Tank weg flexibel ausgebildet sein, was auch bei allen anderen bekannten Konstruktionen vorgesehen wird. Das freie Ende solcher Leitungen ist von einem in der Kanzl befindlichen Arbeiter bis zum Anschluß an der jeweiligen Anschlußstelle des Flugzeuges festzuhalten, was bei Schläuchen mit großem Querschnitt einen erheblichen Kraftaufwand erfordert.

Aufgabe der Erfindung ist es, bei einem Fahrzeug der genannten Art den Gesamtaufbau zu vereinfachen und dabei gleichzeitig die Manövrierbarkeit, Bedienbarkeit und Einsatzfähigkeit zu verbessern.

Die gestellte Aufgabe wird erfindungsgemäß dadurch gelöst, daß der obere Rand der Arbeitskanzel in der Ruhestellung etwa mit der eine Bodenhöhe unter 2 m, insbesondere unter 1,60 m aufweisenden Oberseite des Aufbaues fluchtet und daß zum wenigstens teilweisen Abgleich des durch die Kanzel auf den Kolbentrieb ausgeübten Kipp- bzw. Verkantungsmomentes eine progressiv wirkende mit dem oberen Hubkolbenende verbundene Feder dient, deren zweites Ende im Bereich des oberen Aufbauendes befestigt ist.

Durch die erfindungsgemäße Ausführung wird es möglich, einerseits einen wegen des Einmanöverierens bevorzugten, an und für sich bekannten niedrigen Fahrzeugaufbau zu wählen und anderseits trotzdem für die Betätigung der Arbeitskanzel trotz der nur niedrigen, zur Verfügung stehenden Bauhöhe einen Teleskopkolbentrieb zu verwenden. Man wird einen mindestens zweistufigen, meist aber drei- oder mehrstufigen Hubkolben benötigen. Ohne die erfindungsgemäß vorgesehene Feder wären hier große übergreifende Bereiche der einzelnen Kolbenstufen in ausgezogenem Zustand notwendig, um die notwendige Stabilität zu erzielen und eine Schwergängigkeit wegen der außerhalb der Kolbenachse angreifenden Last, die durch die Kanzel und ihre Besatzung gegeben ist, zu vermeiden. Bei der geringen zur Verfügung stehenden Bauhöhe ergäbe sich dabei ein sehr schlechtes Verhältnis zwischen der Länge der Überlappungsbereiche und der nutzbaren, d. h. ausfahrbaren Länge der einzelnen Kolbenstufen. Durch die Verwendung der Feder wird es möglich, mit nur geringem Übergriff der einzelnen Kolbenstufen zu arbeiten, wobei durch Verwendung einer progressiv wirkenden Feder das durch die Kanzel erzeugte Kippmoment zumindest in der stärksten Auszugsstellung weitgehend ausgeglichen wird, weshalb keine weiteren Führungen für die Kanzel benötigt werden.

Damit von der Kanzel aus ein größerer Bereich am Flugzeug erreicht und kleinere Manöverierfehler beim Unterfahren der jeweiligen Anschlußstelle ausgeglichen werden können, ist nach einer Weiterbildung die Arbeitskanzel über ein Zwischenlager begrenzt um die Hubkolbenlängsachse schwenkbar gelagert.

Die Feder benötigt für ihre Unterbringung nur wenig Platz. Zur vollen Ausnützung der zur Verfügung stehenden Höhe kann der als Tank ausgebildete Aufnahmebehälter oberseitig eine Längsrinne zur versenkten Aufnahme der Feder bei abgesenkter Arbeitskanzel aufweisen.

Die Feder wird als in ihrer Längsrichtung wirkende Feder ausgebildet und in einem mit seinen Enden am Fahrzeugaufbau und am oberen Hubkolbenende angelenkten Teleskoprohr untergebracht. Dabei kann die Feder eine Zug- oder Druckfeder bzw. Luftfeder sein. Bei Verwendung starrer Querachsen an den Anlenkstellen des Teleskoprohres wird eine zusätzliche Stabilisierung des ausgefahrenen Systems gegen ein Ausknicken in Richtung auf die Fahrzeugseiten zu erzielt. Die Kanzel wird vorzugsweise am Fahrzeugheck im Bereich der Fahrzeugquermitte angebracht, wodurch ebenfalls das Einmanöverieren unter einen bestimmten Punkt des Flugzeuges gegenüber einer seitlich angebrachten Kanzel erleichtert wird.

Wegen der besonderen Art der Kanzelführung und -betätigung wird es möglich, parallel zu dem Teleskopkolbentrieb wenigstens ein mit ihm ein

und ausfahrbares Teleskoprohr als Anschlußleitung für den Tank vorzusehen, an dessen oberes Ende ein Anschlußstück, beispielsweise ein flexibler Leitungsteil oder ein Trichter, anschließbar ist. Das Rohr selbst wird mit dem Teleskopkolbentrieb betätigt. Die Bedienungsperson hat nur das Anschlußstück zu handhaben.

Die erwähnte Anschlußleitung kann in einem heckseitig nach unten abgestuften Endstück des Tankes münden, wobei der Auslaß des Tankes in dieser Abstufung vorgesehen ist. Das abgestufte Endstück wird hinter der Hinterachse des Fahrzeuges vorgesehen. Durch die Abstufung ergibt sich eine Vergrößerung des gesamten Tankinhaltes. Der entscheidende Vorteil der erwähnten Anordnung besteht aber darin, daß sich bei der Entsorgung von Toiletten die dicken Fäkalienanteile im Bereich der Abstufung sammeln werden und beim Ablassen zunächst diese dicken Anteile austreten, wobei sich durch die nachströmende Flüssigkeit aus dem übrigen Tankbereich eine Nachspülwirkung ergibt.

Um auch bei dem Teleskoprohr möglichst große Längen der Einzelschüsse zu erzielen, kann das Teleskoprohr in der eingefahrenen Stellung wenigstens zum Teil in den Tank versenkt sein. Damit dieser versenkte Teil des Teleskoprohres auch bei nur geringem Auszug beim Entleeren von Toiletten aus dem Tank entfernt wird, kann eine das Teleskoprohr im Sinne des Ausfahrens aus dem Tank belastende Feder vorgesehen sein.

In der Zeichnung ist der Erfindungsgegenstand beispielsweise dargestellt. Es zeigt

Figur 1 ein erfindungsgemäßes Fahrzeug schematisiert in Seitenansicht und

Figur 2 das Fahrzeug nach Fig. 1 in Draufsicht.

Auf einem Lastkraftwagen 1 sind als Aufbau zwei oder drei Flachtanks 2 bzw. 3 und 15 auf- bzw. nebeneinander angebracht, welche Tanks beispielsweise der Aufnahme von Fäkalien, von Spülwasser und eines Desinfektionsmittels dienen, wobei der eine für mehrere Füllungen des Tankes 3 ausreichende Desinfektionsmittelmenge enthaltende Behälter 15 über eine Dosiereinrichtung mit dem Tank 3 oder einer Ein- bzw. Auslaßleitung für diesen Tank verbunden ist, so daß er dem Spülwasser eine vorbestimmte Anteilsmenge an Desinfektionsmittel zusetzt.

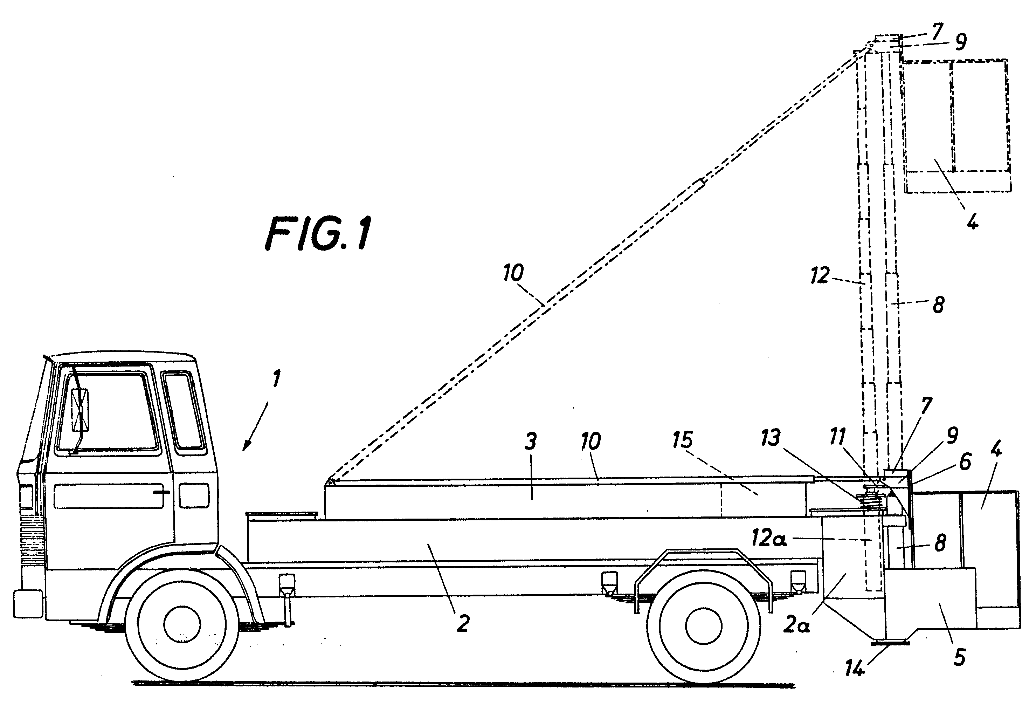

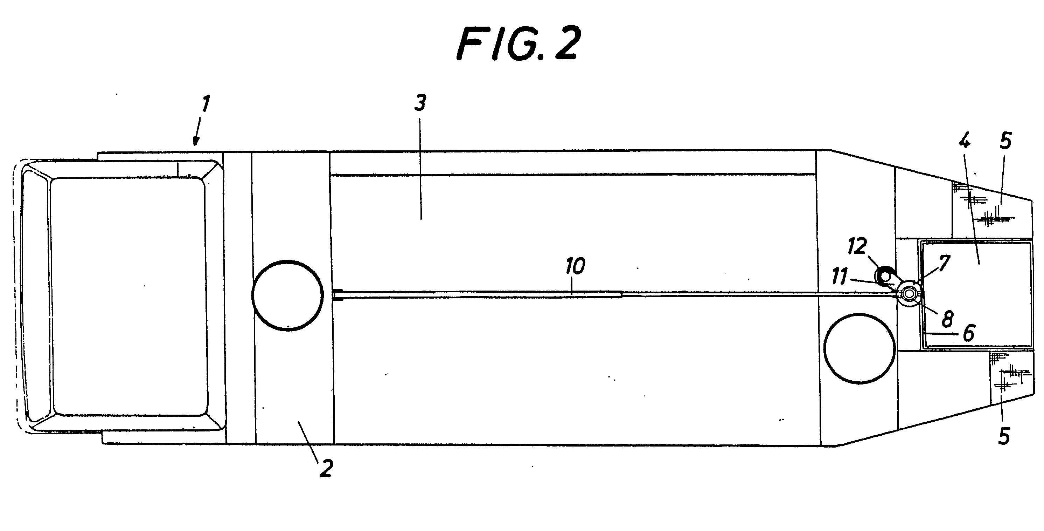

Im Bereich des Fahrzeughecks ist eine Arbeitskanzel 4 mit einem Bodenteil und einem Haltegeländer vorhanden, die in der Ruhestellung (in Fig. 1 und 2 mit vollen Linien dargestellt) in eine Ausnehmung zwischen zwei Trittstufen 5 einrastet und die an einem Vertikalträger 6 sitzt, der mit einem Drehlager 7 starr verbunden ist, das seinerseits um das obere Ende eines Teleskopkolbens 8 verdreht werden kann. Zu diesem Zweck ist am Teleskopkolben 8 ein Bund 9 vorhanden, auf dem sich das Drehlager 7 abstützt. Der Kolben 8 ist am Fahrzeug vor der Kanzel vorgesehen. Mit dem Bund 9 ist auch das eine Ende eines Teleskoprohres 10 gelenkig verbunden. Das zweite Ende des Teleskoprohres 10 ist oben am Tank 3 angelenkt. Der Tank kann zur Aufnahme des Rohres 10 eine Längsrinne aufweisen. Im Rohr 10 ist eine Druckfeder angebracht, die eine progressive Federkennlinie aufweist und das Bestreben hat, das Teleskoprohr 10 in sich zusammenzuschieben.

Aus der strichpunktierten Darstellung in Fig. 1 ergibt sich, daß der Teleskopkolben 8 ein mehrstufiger, nur im Sinne des Ausfahrens beaufschlagbarer und unter dem Gewicht der Kanzel 4 einzufahrender Kolben ist. Parallel zum Teleskopkolben 8 und mit dem Bund 9 über eine Querlasche 11 verbunden ist ein Teleskoprohr 12 vorgesehen, das bei in der Ruhestellung befindlicher Kanzel 4 mit einem Bereich 12a in einen abgestuften Endteil 2a des Tankes 2 versenkt ist. Beim Ausfahren des Teleskopkolbens 8 schiebt eine Feder 13 den versenkten Endteil 12a des Rohres 12 nach oben. In weiterer Folge wird das Rohr über den Bund 9 vom Kolben 8 mitgenommen und bewegt sich daher mit seinem oberen Ende etwa mit dem oberen Rand der Kanzel 4. An das obere Ende des Rohres 12 kann ein flexibler Anschluß oder ein mit einem Trichter versehener Anschluß, der von einem in der Kanzel befindlichen Bedienungsmann gehandhabt wird, anschließen. Beim Ausführungsbeispiel dient das Rohr 12 für die Entsorgung von Flugzeugtoiletten. Der Auslaß 14 für den Tank 2 ist im unteren Endbereich der Abstufung 2a, in der sich die Dickstoffe der Fäkalien sammeln werden, angebracht.

## Ansprüche

1. Fahrzeug zur Wartung von Flugzeugen, insbesondere zur Entsorgung der Toiletten von Passagierflugzeugen, bei dem auf einem Fahrgestell ein Aufbau mit wenigstens einem Aufnahmebehälter angebracht und im Bereich des Fahrzeughecks eine Arbeitskanzel (4) vorgesehen ist, von der aus wenigstens eine zumindest teilweise flexible Anschlußleitung (12) des Aufnahmebehälters manipulierbar ist und die aus einer Ruhestellung mittels eines stehenden hydraulischen Teleskopkolbentriebes (8) höhenverstellbar ist, wobei die Arbeitskanzel (4), bezogen auf die Fahrzeuglängsachse, hinter dem Teleskopkolbentrieb angebracht ist, dadurch gekennzeichnet, daß der obere Rand der Arbeitskanzel (4) in der Ruhestellung etwa mit der eine Bodenhöhe unter 2 m, insbesondere unter 1,60 m aufweisenden Oberseite des Aufbaues fluchtet und daß zum wenigstens teilweisen Abgleich des durch die Kanzel auf den Kolbentrieb ausgeübten Kipp- bzw. Verkantungsmomentes eine progressiv wirkende mit dem oberen Hubkolbenende (9) verbundene Feder (10) dient, deren zweites Ende im Bereich des oberen Aufbauendes befestigt ist.

2. Fahrzeug nach Anspruch 1, dadurch gekennzeichnet, daß die Arbeitskanzel (4) über ein Drehlager (7) begrenzt um die Hubkolbenlängsachse schwenkbar gelagert ist.

3. Fahrzeug nach Anspruch 1 oder 2, dadurch gekennzeichnet, daß der als Tank (3) ausgebildete Aufnahmebehälter oberseitig eine Längsrinne zur versenkten Aufnahme der Feder (10) bei abgesenkter Arbeitskanzel (4) aufweist.

4. Fahrzeug nach einem der Ansprüche 1 bis 3, dadurch gekennzeichnet, daß die Feder (10) als in ihrer Längsrichtung wirkende Feder ausgebildet und in einem mit seinen Enden am Fahrzeugaufbau (3) und am oberen Hubkolbenende (9) angelenkten Teleskoprohr untergebracht ist.

5. Fahrzeug nach einem der Ansprüche 1 bis 3, dadurch gekennzeichnet, daß die Feder (10) als Luftfeder ausgebildet ist und mit ihren Enden am Fahrzeugaufbau (3) und am oberen Hubkolbenende angelenkt ist.

6. Fahrzeug nach einem der Ansprüche 1 bis 5, dadurch gekennzeichnet, daß parallel zu dem Teleskopkolbentrieb (8) wenigstens ein mit ihm ein- und ausfahrbares Teleskoprohr (12) als Anschlußleitung für den Tank (2) vorgesehen ist, an dessen oberes Ende ein Anschlußstück anschließbar ist.

7. Fahrzeug nach einem der Ansprüche 1 bis 6, dadurch gekennzeichnet, daß die Anschlußleitung (12) in einem heckseitig nach unten abgestuften Endstück (2a) des Tankes (2) mündet und daß der Auslaß (14) des Tankes (2) in dieser Abstufung vorgesehen ist.

8. Fahrzeug nach einem der Ansprüche 1 bis 7, dadurch gekennzeichnet, daß das die Anschlußleitung bildende Teleskoprohr (12) in der eingefahrenen Stellung (12a) wenigstens zum Teil in den Tank (2a) versenkt ist.

9. Fahrzeug nach Anspruch 8, dadurch gekennzeichnet, daß eine das Teleskoprohr (12) im Sinne des Ausfahrens aus dem Tank (2) belastende Feder (13) vorgesehen ist.

## Claims

1. A vehicle for servicing aircraft, particularly for removing waste from toilets of passenger aeroplanes a superstructure having at least one collecting container is mounted on a chassis, an operator's cockpit (4) is provided adjacent to the rear end of the vehicle, at least one conduit (12), which is connected to the collecting container and is flexible at least on part is adapted to be manipulated from said platform, which is adjustable in height from a position of rest by means of a vertical hydraulic telescopic cylinder-piston unit (8), and said operator's platform (4) is mounted behind the telescopic cylinder-piston unit (8), and said operator's platform (4) is mounted behind the telescopic cylinder-piston unit along the longitudinal axis of the vehicle, characterized in that the top edge of the operator's platform (4) when at rest is approximately aligned with the top of the superstructure, which has an elevation of less than 2 metres, particularly less than 1.60 metres, above the ground, and the tilting and canting moments exerted by the platform on the cylinder-piston unit are compensated at least in part by a progressively acting spring (10), which is connected to the top end (9) of the cylinder-piston unit and the second end of which is secured adjacent to the top end of the superstructure.

2. A vehicle according to claim 1, characterized in that the operator's platform (4) is mounted by means of a swivel bearing (7) to be capable of a limited pivotal movement about the longitudinal axis of the lifting piston.

3. A vehicle according to claim 1 or 2, characterized in that the collecting container consists of a tank (3) and is provided on its top with a longitudinal groove for accommodating the spring (10) when the operator's platform (4) has been lowered.

4. A vehicle according to any of claims 1 to 3, characterized in that the spring (10) consists of a spring acting in its longitudinal direction and is accommodated in a telescopic tube, the ends of which are hinged to the superstructure (3) of the vehicle and to the top end (9) of the lifting piston, respectively.

5. A vehicle according to any of claims 1 to 3, characterized in that the spring (10) consists of a pneumatic spring and is hinged at its ends to the superstructure (3) of the vehicle and to the top end of the lifting piston, respectively.

6. A vehicle according to any of claims 1 to 5, characterized in that a conduit connected to the tank (2) is constituted by a telescopic tube (12), which extends parallel to the telescopic cylinder-piston unit (8) and is adapted to be retracted and extend together with said unit and a fitting is adapted to be connected to the top end of said tube.

7. A vehicle according to any of claims 1 to 6, characterized in that the connecting conduit (12) opens in an end portion (2a) of the tank (2), said end portion is stepped downwardly and toward the rear, and the outlet (14) of the tank (2) is provided in that stepped portion.

8. A vehicle according to any of claims 1 to 7, characterized in that the telescopic tube (12) which constitutes the connecting conduit is accommodated at least in part in the tank (2a) when said tube is in its retracted position (12a).

9. A vehicle according to claim 8, characterized in that a spring (13) is provided, which tends to extend the telescopic tube (12) out of the tank (2).

**Revendications**

1. Véhicule de maintenance pour avions, en particulier pour assurer la vidange-nettoyage des toilettes d'avions pour passagers, sur lequel est montée sur un châssis une superstructure avec au moins un récipient de réception et est prévue dans la zone de l'arrière du véhicule une nacelle de travail (4) à partir de laquelle au moins une conduite (12) de branchement au moins partiellement flexible du récipient de réception peut être manipulée et qui peut être positionnée dans le sens de la hauteur à partir d'une position de repos au moyen d'un mécanisme hydraulique à piston télescopique (8), la nacelle de travail (4) étant placée, par rapport à l'axe longitudinal du véhicule, derrière le mécanisme à piston télescopique, véhicule caractérisé par le fait qu'en position de repos, le bord haut de la nacelle (4) de travail se trouve à peu près en affleurement avec le côté supérieur de la superstructure présentant une hauteur au-dessus du sol de moins de 2 m, en particulier de moins de 1,60 m, et qu'au moins un ressort (10) à action progressive qui est relié à l'extrémité supérieure (9) du piston de levage et fixé par sa seconde extrémité dans la zone de l'extrémité supérieure de la superstructure sert à compenser au moins partiellement le moment de bascule ou de renversement exercé par la nacelle sur le mécanisme à piston.

2. Véhicule suivant la revendication 1 caractérisé par le fait que la nacelle (4) de travail est montée de manière articulée par l'intermédiaire d'un coussinet (7) de pivotement pour pouvoir pivoter d'une façon limitée autour de l'axe longitudinal du piston de levage.

3. Véhicule suivant la revendication 1 ou 2, caractérisé par le fait que le récipient de réception réalisé sous la forme d'une citerne (3) présente du côté supérieur une rigole longitudinale pour le montage noyé du ressort (10) lorsque la nacelle de travail (4) est abaissée.

4. Véhicule suivant l'une quelconque des revendications 1 à 3, caractérisé par le fait que le ressort (10) est réalisé sous la forme d'un ressort agissant dans le sens de sa longueur et logé dans un tube télescopique articulé par ses extrémités sur la superstructure (3) du véhicule et à l'extrémité supérieure (9) du piston de levage.

5. Véhicule suivant l'une quelconque des revendications 1 à 3, caractérisé par le fait que le ressort (10) est réalisé sous la forme d'un ressort pneumatique et articulé par ses extrémités sur la superstructure (3) du véhicule et à l'extrémité supérieure du piston de levage.

6. Véhicule suivant l'une quelconque des revendications 1 à 5, caractérisé par le fait qu'il est prévu parallèlement au mécanisme à piston télescopique (8) au moins un tube télescopique (12) pouvant être rentré et sorti avec ledit mécanisme à piston et servir de conduite de branchement pour la citerne (3), et à l'extrémité supérieure duquel peut être raccordée une partie de raccord.

7. Véhicule suivant l'une quelconque des revendications 1 à 6, caractérisé par le fait que la conduite (12) de branchement débouche dans une partie terminale (2a) étagée à l'arrière vers le bas de la citerne (2) et que la sortie (14) de la citerne (2) est prévue dans ledit étagement.

8. Véhicule suivant l'une quelconque des revendications 1 à 7, caractérisé par le fait que le tube télescopique (12) formant la conduite de branchement est noyé au moins partiellement dans la citerne (2a) en position rentrée (12a).

9. Véhicule suivant la revendication 8, caractérisé par le fait qu'il est prévu un ressort (13) qui applique sa force sur le tube télescopique (12) dans le sens de la sortie hors de la citerne (2).

FIG.1

0 055 243

*FIG.2*